(19) **Europäisches Patentamt / European Patent Office / Office européen des brevets**

(11) **EP 1 760 640 A1**

(12) **EUROPEAN PATENT APPLICATION**

(43) Date of publication:
**07.03.2007 Bulletin 2007/10**

(51) Int Cl.:
*G06K 19/07* (2006.01)    *G06K 7/00* (2006.01)
*G01S 11/06* (2006.01)    *G01S 5/00* (2006.01)
*H04L 27/00* (2006.01)

(21) Application number: **06251132.4**

(22) Date of filing: **02.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.08.2005 JP 2005250158**

(71) Applicant: **Fujitsu Ltd.**
**Kawasaki-shi, Kanagawa 211-8588 (JP)**

(72) Inventors:
• **Yamazakai, Daisuke,**
c/o Fujitsu Limited
Kawasaki-shi,
Kanagawa 211-8588 (JP)
• **Radecki, Andrzej,**
c/o Fujitsu Limited
Kawasaki-shi,
Kanagawa 211-8588 (JP)
• **Gotoh, Kunihiko,**
c/o Fujitsu Limited
Kawasaki-shi,
Kanagawa 211-8588 (JP)

(74) Representative: **Cooper-Rolfe, Elizabeth Louise et al**
**HASELTINE LAKE**
**Imperial House**
**15-19 Kingsway**
**London WC2B 6UD (GB)**

(54) **System for measuring the distance between an RFID tag and a base station**

(57)    An RFID tag (102), which includes an analog/digital conversion circuit for converting a signal representing the strength of a signal received by the tag via an antenna (103) from an analog format to a digital format, and a transmission circuit for transmitting the signal in digital format, or a signal derived therefrom, via the antenna. An RFID reader/writer device (101) is also disclosed, which includes a transmission circuit for transmitting a signal via an antenna to an RFID tag, and a conversion circuit for receiving a signal representing the strength of a signal transmitted via the antenna, and obtaining from that signal information about the distance (LE) between the RFID tag and the reader/writer.

# F I G. 1

**Description**

This application is based upon and claims the benefit of priority from the prior Japanese Patent Application No. 2005-250158, filed on August 30, 2005, the entire contents of which are incorporated herein by reference.

The present invention relates to an RFID tag device, an RFID reader/writer device, and a distance measuring system.

In Patent Document 1 described below, a destination advice system is described, which includes: a destination RFID attached to an object or a location in an advice space, including plural antennas having different communication distances, and emitting a response wave containing unique identification information corresponding to the antenna from the respective antennas with respond to a coming interrogation wave; and a position judging means judging a position of each destination RFID within the advice space from a combination of the identification information recognized by plural reading means as for the same destination RFID. However, a cost as a system becomes high when plural antennas are used.

Besides, in the Patent Document 1, a destination advice system is described, which includes: a destination RFID attached to an object or a location in an advice space, and emitting a response wave containing unique identification information with respond to a coming interrogation wave; plural reading means of which transmitting/receiving directions are different from one another, sequentially emitting interrogation waves having different reaching distances in stages, and judging an existing distance range of the destination RFID viewed from the reading means by each destination RFID, from a presence/absence of a reception of the response wave from each destination RFID for the interrogation waves in each stage; and a position judging means judging a position of the destination RFID in the advice space based on a combination of the existing distance range judged by the respective reading means as for the same destination RFID. However, there are problems that control parts are required when the interrogation waves having different reaching distances in stages are sequentially emitted to thereby cause an increase of a cost, and a long time is required because accesses are performed with different interrogation waves in plural times.

Besides, in Patent Document 2 described below, a system is described, in which a detector detects a time, an intensity, or a waveform shape of a radio signal returned from an RFID tag, to determine a distance of the RFID tag. However, it is difficult to measure the distance accurately by this method because a reflection of a non-responding RFID tag also exists when the RIFD tags are provided in plural.

Besides, in Patent Document 3 described below, an action data processing system is described, which includes: plural readers respectively provided at action ranges of which action data are to be recorded; plural transponders replying signals transmitted from these respective readers; and a data processor statistically processing predetermined data replied from these plural transponders and accumulated on the readers via a network.

[Patent Document 1] Japanese Patent Application Laid-open No. 2001-116583
[Patent Document 2] Translated National Publication of Patent Application No. 2002-525640
[Patent Document 3] Japanese Patent Application Laid-open No. 2001-92885

As stated above, there are problems that a cost is high, a long time is required, and an accurate measuring of a distance is difficult, according to the above-stated systems.

Embodiments of the present invention seek to provide means operable to measure a distance between an RFID tag device and an RFID reader/writer device. Advantageously, embodiments of the present invention are low cost, and/or high-speed and/or high accuracy.

According to an aspect of the present invention, there is provided an RFID tag comprising: an analog/digital conversion circuit for converting a signal representing the strength of a signal received by the RFID tag, via an antenna, from an analog format to a digital format; and a transmission circuit for transmitting the signal in digital format, or a signal derived therefrom, via the antenna.

According to another aspect of the present invention, there is provided an RFID reader/writer device, including: a transmission circuit for transmitting a transmit signal via an antenna to an RFID tag; and a conversion circuit for receiving a receive signal representing the strength of a signal transmitted via the antenna, and obtaining from said receive signal information about a distance between said RFID reader/writer and said RFID tag.

Fig. 1 is a view showing a configuration example of a distance measuring system according to an embodiment of the present invention;
Fig. 2 is a graph showing a relation between a communication distance and a received voltage;
Fig. 3 is a view showing a configuration example of a tag;
Fig. 4 is a circuit diagram showing a configuration example of a rectifying circuit and a signal extracting circuit;
Fig. 5 is a view showing a configuration example of a demodulation circuit;
Fig. 6 is a view showing a waveform example of the received voltage;

Fig. 7 is a view showing a configuration example of a digital signal processing portion;
Fig. 8 is a circuit diagram showing a configuration example of an A/D conversion circuit;
Fig. 9 is a circuit diagram showing a configuration example of a circuit to generate a reference current; and
Fig. 10 is a view showing a configuration example of a reader/writer.

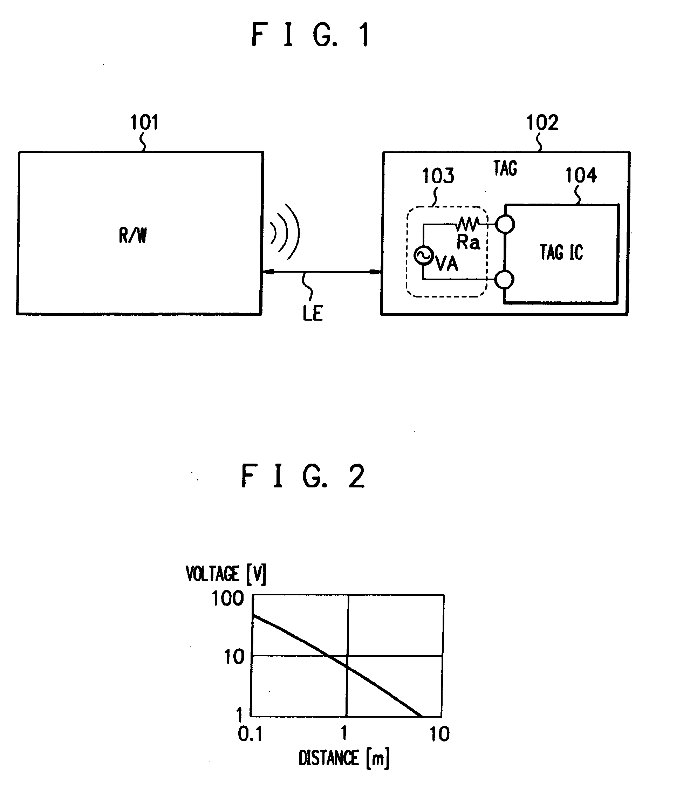

Fig. 1 is a view showing a configuration example of a distance measuring system according to an embodiment of the present invention. The distance measuring system has an RFID (Radio Frequency Identification) reader/writer device 101 and an RFID tag device 102. Hereinafter, the RFID reader/writer device is just referred to as a reader/writer, and the RFID tag device is just referred to as a tag.

The tag 102 has an antenna portion 103 and a tag IC 104. The reader/writer 101 and the tag 102 can communicate with each other by radio signals. The reader/writer 101 can transmit an ID number interrogation wave (interrogation signal) to inquire an ID number (identifier) for the tag 102. The tag 102 transmits the ID number of itself to the reader/writer 101 when the ID number interrogation wave is received. The number of the tag 102 may be one or in plural. When the tags 102 are provided in plural, the respective tags 102 have different ID numbers. The reader/writer 101 can transmit the above-stated ID number interrogation wave, for example, with specifying the last one digit of the ID number. Only the tag 102 having the ID number with the specified last one digit responds to it and transmits the ID number to the reader/writer 101. As stated above, the reader/writer 101 can recognize the ID number of the tag 102.

A relative distance LE between the reader/writer 101 and the tag 102 varies. There is a case when a position of the reader/writer 101 is fixed and the tag 102 moves. Further, there is a case when a position of the tag 102 is fixed and the reader/writer 101 moves. The distance measuring system can measure the distance LE between the reader/writer 101 and the tag 102. The reader/writer 101 can transmit a distance interrogation wave (distance interrogation signal) for inquiring the distance to the tag 102 with specifying the ID number via the antenna. The tag 102 receives the distance interrogation wave, and then, transmits a signal representing a size of the distance interrogation wave received via the antenna together with the ID number to the reader/writer 101 via the antenna, when the tag 102 has the specified ID number.

An electric power of the signal received by the tag 102 from the reader/writer 101 (hereinafter, referred to as a received power) has mutual relation relative to a communication distance between the reader/writer 101 and the tag 102 (hereinafter, referred to as a communication distance) LE. The tag 102 has a function to convert a size of the electric power of the received signal from an analog format to a digital format, and to reply to the reader/writer 101. Herewith, the distance measuring system can measure the communication distance LE accurately.

For example, when an UHF band is used for a carrier wave (carrier) frequency of the communication, there is a relation that the received power is in inverse proportion to the second power of the communication distance LE. If the communication distance is 1 m and the received power is 18 mW; when the communication distance is 2 m, the received power becomes 4.5 mW; and when the communication distance is 3 m, the received power becomes 2 mW.

Fig. 2 is a graph showing a relation between the communication distance LE and a received voltage VA. A horizontal axis represents the communication distance LE, and a vertical axis represents the received voltage VA. As shown in Fig. 1, the antenna portion 103 is represented by an antenna resistance Ra and an open-circuit voltage (received voltage) VA. The open-circuit voltage VA is represented by the following formula. Here, PA is the received power. The resistance Ra is, for example, 1 kΩ.

$$VA = \sqrt{(2 \times PA \times Ra)}$$

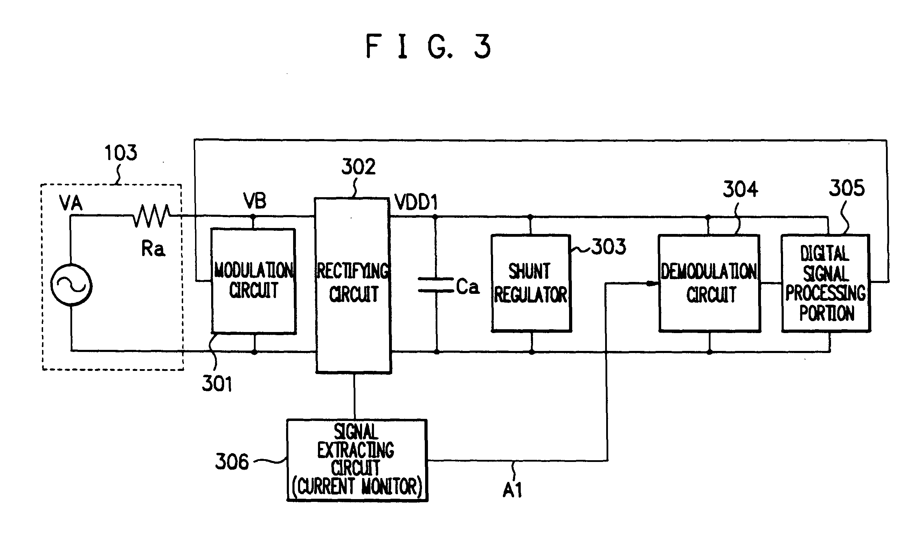

Namely, the open-circuit voltage VA is in inverse proportion to the communication distance LE. Owing to the above-stated characteristic, a current having distance information can be extracted by using a signal extracting circuit 306 (Fig. 3) extracting a current based on the open-circuit voltage VA. The tag 102 can convert this current from the analog format to the digital format, and transmit a signal representing the size (strength) of the current, and therefore being indicative of the distance information, to the reader/writer 101. The reader/writer 101 can receive the signal representing the size of the current, and determine the distance information based on the size of the current.

The tag 102 detects the size of the signal received from the reader/writer 101. The size of the signal may be either of the size of the current or the size of the voltage, and it is converted into the distance information based on the relation shown in Fig. 2. The conversion may be performed at either of the reader/writer 101, or the tag 102. Namely, the tag 102 may convert the size of the signal into the distance information, and then, transmit the converted distance information to the reader/writer 101.

Fig. 3 is a view showing a configuration example of the tag 102 in Fig. 1. The tag 102 has the antenna portion 103, a modulation circuit 301, a rectifying circuit 302, a charging capacitor Ca, a shunt regulator 303, a demodulation circuit 304, a digital signal processing portion 305, and the signal extracting circuit (current monitor) 306, to obtain a direct-current power supply from a high-frequency signal irradiated from the reader/writer 101 (Fig. 1), and to extract a signal data from the same high-frequency signal.

The antenna portion 103 receives the high-frequency signal on which a predetermined signal data is superimposed, and generates an antenna induced voltage VA by an antenna coil. The high-frequency signal is generated by the reader/writer 101 (Fig. 1), and an amplitude modulation such as an ASK (Amplitude Shift Keying) modulation is performed in accordance with the signal data. Then, an input voltage VB is generated for the rectifying circuit 302 by a predetermined resistance Ra which is held by the antenna portion 103.

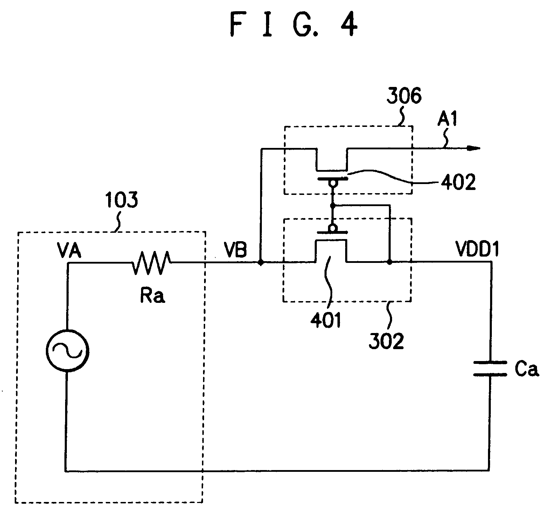

The rectifying circuit 302 is a circuit to rectify the high-frequency signal received by the antenna portion 103 to retrieve a power supply signal component, and generates a power supply voltage VDD1 after rectified from the input voltage VB of the rectifying circuit 302 generated by the antenna portion 103. A circuitry of the rectifying circuit 302 is not particularly limited, but an example thereof is described later with reference to Fig. 4.

The charging capacitor Ca charges the power supply voltage VDD1. The shunt regulator 303 is a voltage control circuit, constantly monitors the voltage so that the power supply voltage VDD1 which is rectified by the rectifying circuit 302 for the power supply is to be kept constant, and performs a control of a short-circuit current. Namely, the control is performed to keep a constant voltage by increasing the short-circuit current when the voltage is high. This is mainly to stabilize a fluctuation of the power supply voltage caused by the distance LE from the reader/writer 101 (Fig. 1). However, it also affects so as to stabilize the voltage even when the signal data is amplitude modulated by a carrier wave and the amplitude is fluctuated.

The signal extracting circuit (current monitor) 306 detects (monitors) the current flowing in the rectifying circuit 302, generates an extraction signal A1 in accordance with a current value, and outputs to the demodulation circuit 304. In the rectifying circuit 302, the received high-frequency signal is rectified, but the high-frequency signal is amplitude modulated in accordance with the signal data, and therefore, the current to be rectified is also fluctuated in accordance with the above. In the signal extracting circuit (current monitor) 306, the current value of the current flowing in the rectifying circuit 302 is detected to thereby generate the extraction signal to demodulate the signal data. In particular, when a power supply voltage fluctuation after rectified is suppressed by consuming the short-circuit current by the shunt regulator 303, the shunt regulator 303 comes to control the short-circuit current in accordance with an amplitude variation according to "0" or "1" of the signal data superimposed by the received high-frequency signal. Consequently, the current flowing in the rectifying circuit 302 varies according to the signal data even under a state that the power supply voltage is kept in constant. Namely, it is possible to extract the signal data by detecting the variation of the current flowing in the rectifying circuit 302.

The demodulation circuit 304 demodulates the signal data based on the extraction signal A1 inputted from the signal extracting circuit (current monitor) 306 to generate a digital signal. Besides, the demodulation circuit 304 converts the size of the signal A1 from the analog format to the digital format. These digital signals are signal processed at the digital signal processing portion 305. The digital signal processing portion 305 performs a transmission process of the ID number of itself when the ID number interrogation wave is received, and performs the transmission process of the size of a received current A1 when the distance interrogation wave is received. The modulation circuit 301 modulates an impedance of the antenna portion 103 in accordance with a transmit signal transmitted from the digital signal processing portion 305. The transmit signal is radio transmitted from the antenna portion 103 to the reader/writer 101.

Fig. 4 is a circuit diagram showing a configuration example of the rectifying circuit 302 and the signal extracting circuit 306 in Fig. 3. The rectifying circuit 302 is composed of a p-channel MOS (Metal Oxide Semiconductor) field-effect transistor 401. The transistor 401 constitutes a diode in which a gate terminal and a source terminal are connected with each other. The rectifying circuit 302 performs a half-wave rectification. The signal extracting circuit 306 is composed of a p-channel MOS field-effect transistor 402. In the transistors 401 and 402, the gates are connected with each other, and therefore, a same drain current A1 flows if the sizes are the same. Namely, the current A1 becomes the same current value with the signal rectified by the rectifying circuit 302. Incidentally, if the size of the transistor 402 is set to be a hundredth part of the size of the transistor 401, the current being a hundredth part of the current of the transistor 401 flows in the transistor 402. The signal extracting circuit 306 extracts the current A1 to output to the demodulation circuit 304 (Fig. 3).

In the transistor 401 composing the rectifying circuit 302, a connection point with the antenna portion 103 is connected to the drain terminal, the source terminal is connected to the charging capacitor Ca and the shunt regulator 303 at the next stage, and the gate terminal and the source terminal are connected. This transistor 401 performs the rectification by the current flowing between the drain and the source when the voltage applied to the drain terminal goes beyond the voltage of the source terminal in accordance with a variation of the input voltage VB. In the transistor 402 composing the signal extracting circuit 306, the drain terminal is connected to the connection point of the rectifying circuit 302 and the antenna portion 103, the source terminal is connected to the demodulation circuit 304, and the gate terminal is connected in common with the gate terminal of the transistor 401 which is a rectifying element. In this transistor 402 for the current monitoring, the drain current A1 flows when the current flows in the transistor 401 of the rectifying circuit 302 in accordance with the variation of the input voltage VB. As stated above, the transistor 402 can generate an extraction current signal A1 in accordance with the current value, when the current flows in the transistor 401.

Operations of the tag 102 having the rectifying circuit 302 and the signal extracting circuit 306 with such a configuration are described. The high-frequency signal amplitude modulated in accordance with "0" or "1" of the signal data is received from the antenna portion 103, and an input voltage VB1 or VB2 is inputted to the rectifying circuit 302 according to an antenna induced voltage VA1 when the signal data is "0", or an antenna induced voltage VA2 when the signal data is "1". The rectifying circuit 302 retrieves the power supply signal component from the input signal to generate the power supply voltage VDD1. The shunt regulator 303 monitors the power supply voltage VDD1, and controls the short-circuit current so that the power supply voltage VDD1 is in constant. Namely, an output voltage of the rectifying circuit 302 varying in accordance with the input voltage VB1 or the input voltage VB2 of the rectifying circuit 302, is kept in constant by the control of the short-circuit current. The signal extracting circuit 306 detects this current variation as the extraction signal, and outputs to the demodulation circuit 304. Incidentally, a current signal A1 extracted by the signal extracting circuit 306 does not depend on an on-resistance of the rectifying element composing the rectifying circuit 302.

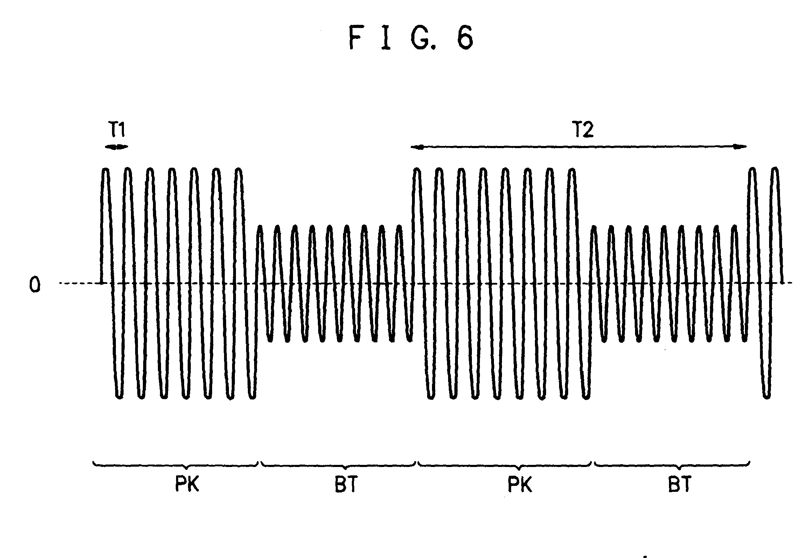

Fig. 6 is a view showing a waveform example of the open-circuit voltage (received voltage) VA. A signal data with a period T2 of the open-circuit voltage VA is modulated by the carrier wave with a period T1. For example, the period T1 is 1 ns, and the period T2 is 25 $\mu$s. The signal data is a digital signal of "0" or "1". A peak portion PK shows, for example, the signal data of "1", and a bottom portion BT shows the signal data of "0".

In Fig. 2, when the open-circuit voltage VA is 6 V, the communication distance LE can be judged as 1 m. The power supply voltage VDD1 accumulated on the capacitor Ca is, for example, 3 V. A voltage drop of the rectifying circuit 302 is, for example, 0.3 V. The resistance Ra is, for example, 1 k$\Omega$. In that case, the current A1 flows only when the voltage VB exceeds 3.3 V (= 3 + 0.3). Namely, the current A1 corresponds to a signal waveform when the open-circuit voltage VA exceeds 3.3 V. When the open-circuit voltage VA is 6 V, the current A1 flowing in the resistance Ra can be represented by the following formula.

$$A1 = (6\ V - 3.3\ V)/\ 1\ k\Omega = 2.7\ mA$$

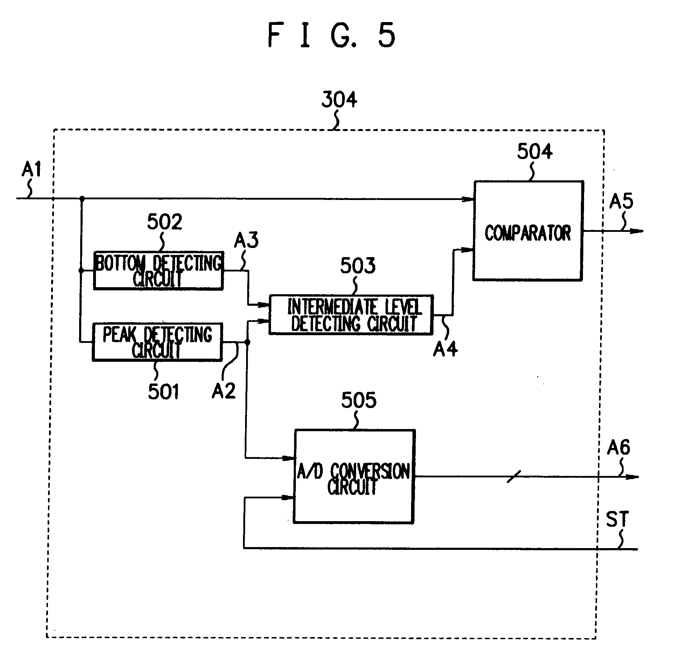

Fig. 5 is a view showing a configuration example of the demodulation circuit 304 in Fig. 1. A peak detecting circuit 501 detects the peak portion PK (Fig. 6) of the current signal A1. A bottom detecting circuit 502 detects the bottom portion BT (Fig. 6) of the current signal A1. An intermediate level detecting circuit 503 detects an intermediate value (average value) A4 between a current value A2 of the peak portion PK detected by the peak detecting circuit 501 and a current value A3 of the bottom portion BT detected by the bottom detecting circuit 502. A comparator 504 compares the current signal A1 and the intermediate value A4, and outputs a comparison result to the digital signal processing portion 305 as a digital data signal A5. For example, when the current signal A1 is larger than the intermediate signal A4, "1" is outputted as the data signal A5, and when the current signal A1 is smaller than the intermediate signal A4, "0" is outputted as the data signal A5. An A (analog)/ D (digital) conversion circuit 505 converts the current value A2 of the peak portion PK from the analog format to the digital format when a start signal ST is inputted from the digital signal processing portion 305, and outputs a digital signal A6 to the digital signal processing portion 305.

As stated above, it is possible to measure the size of the received signal (current) independent of data contents, by detecting the peak portion PK and converting the peak current value A2 into the digital signal. Herewith, accurate distance information can be obtained. Incidentally, in the A/D conversion circuit 505, the bottom current value A3 may be converted from the analog format to the digital format in stead of the peak current value A2.

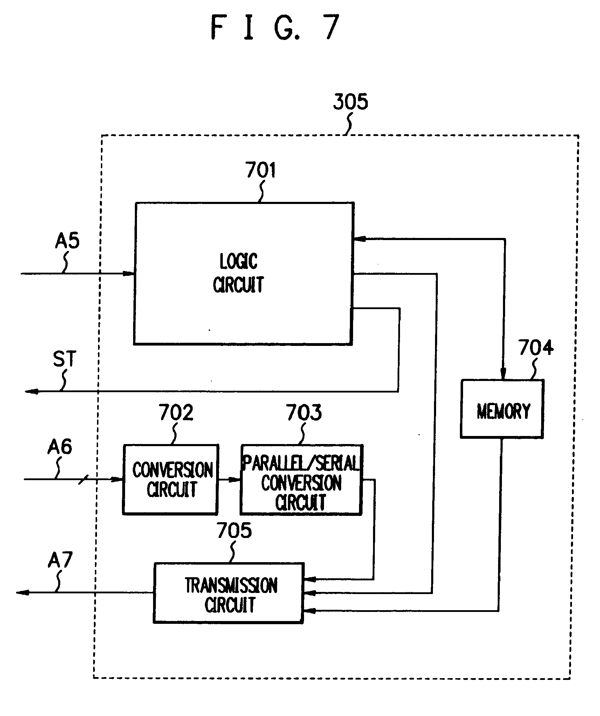

Fig. 7 is a view showing a configuration example of the digital signal processing portion 305 in Fig. 3. A logic circuit 701 is inputted the data signal A5 from the demodulation circuit 304, and performs a process according to a command of the data signal A5. When an ID number is specified within the command, the logic circuit 701 performs the process only when the specified ID number and the ID number of itself are the same.

When the logic circuit 701 receives the ID number interrogation wave from the reader/writer 101, it reads out the ID number of itself in a memory 704, to indicate a transmission to a transmission circuit 705. The transmission circuit 705 outputs the ID number as a transmission signal A7.

The digital signal processing portion 305 does not require a conversion circuit 702 when the signal A6 representing the size of the received signal is transmitted to the reader/writer 101 as it is. A parallel/serial conversion circuit 703 converts, for example, the signal A6 with 7 bits from a parallel signal to a serial signal, to output to the transmission circuit 705. When the logic circuit 701 receives the distance interrogation wave from the reader/writer 101, it indicates the transmission circuit 705 to transmit the signal A6. The transmission circuit 705 outputs the serial signal of the signal A6 together with the ID number as the transmission signal A7.

Next, the case when the conversion circuit 702 is provided, is described. The conversion circuit 702 has a table or a conversion formula to convert from a current A6 to the communication distance LE as same as the graph in Fig. 2, and performs a conversion from the current A6 to the communication distance LE. The parallel/serial conversion circuit 703 converts a signal of the communication distance LE from the parallel signal to the serial signal, to output to the transmission circuit 705. When the logic circuit 701 receives the distance interrogation wave from the reader/writer 101, it indicates the transmission circuit 705 to transmit the communication distance LE. The transmission circuit 705 outputs the serial signal of the communication distance LE together with the ID number as the transmission signal A7.

The transmission signal A7 is modulated by the modulation circuit 301, and radio transmitted from the antenna portion 103 to the reader/writer 101.

Besides, the logic circuit 701 outputs the start signal ST of the A/D conversion to the A/D conversion circuit 505 when the distance interrogation wave (command) is received. The A/D conversion circuit 505 starts the conversion from the analog format to the digital format when the start signal ST is inputted.

Besides, the A/D conversion circuit 505 may perform the conversion from the analog format to the digital format regardless of the start signal ST. The digital signal or the distance information is stored in the demodulation circuit 304. When the logic circuit 701 receives the distance interrogation wave (command), it can perform the transmission process of the above-stated stored digital signal or the distance information.

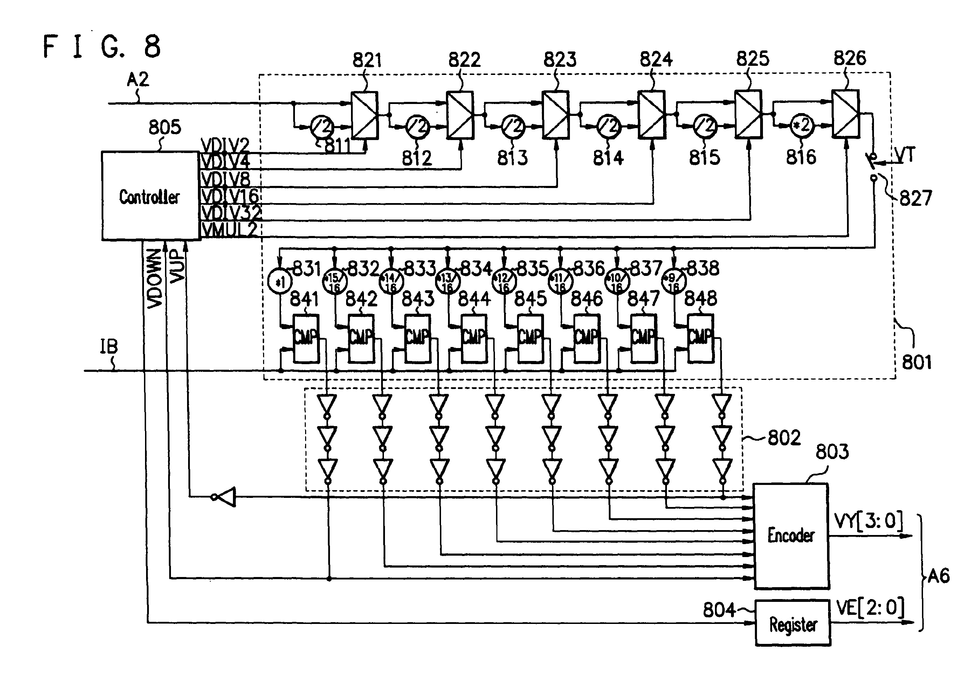

Fig. 8 is a circuit diagram showing a configuration example of the A/D conversion circuit 505 in Fig. 5. The A/D conversion circuit 505 has a flash type A/D converter 801, an A/D interface 802, an encoder 803, a register 804, and a controller 805.

The controller 805 controls selectors 821 to 826 via control signals VDIV2, VDIV4, VDIV8, VDIV16, VDIV32, and VMUL2. A divider 811 makes the received current A2 half and outputs the result. The selector 821 selects and outputs the received current A2 or the output signal of the divider 811 in accordance with the control signal VDIV2. A divider 812 makes an output signal of the selector 821 half and outputs the result. The selector 822 selects and outputs the output signal of the selector 821 or the output signal of the divider 812 in accordance with the control signal VDIV4. A divider 813 makes an output signal of the selector 822 half and outputs the result. The selector 823 selects and outputs the output signal of the selector 822 or the output signal of the divider 813 in accordance with the control signal VDIV8. A divider 814 makes an output signal of the selector 823 half and outputs the result. The selector 824 selects and outputs the output signal of the selector 823 or the output signal of the divider 814 in accordance with the control signal VDIV16. A divider 815 makes an output signal of the selector 824 half and outputs the result. The selector 825 selects and outputs the output signal of the selector 824 or the output signal of the divider 815 in accordance with the control signal VDIV32. A multiplier 816 makes an output signal of the selector 825 double and outputs the result. The selector 826 selects and outputs the output signal of the selector 825 or the output signal of the multiplier 816 in accordance with the control signal VMUL2. A switch 827 outputs an output signal of the selector 826 to arithmetic circuits 831 to 838 in accordance with a control signal VT.

The arithmetic circuits 831 to 838 make the output signal of the selector 826 one time, 15/16 times, 14/16 times, 13/16 times, 12/16 times, 11/16 times, 10/16 times, and 9/16 times, respectively and output the results. Comparators 841 to 848 respectively compare output signals of the arithmetic circuits 831 to 838 and a reference current IB, to output the comparison results to the encoder 803 via the A/D interface 802.

The encoder 803 encodes the comparison results of the comparators 841 to 848, to output a digital signal VY with lower 4 bits. The controller 805 outputs a digital signal VE with upper 3 bits to the register 804 in accordance with selected states of the selectors 821 to 826. The digital signal A6 with 7 bits is composed of the upper 3 bits signal VE and the lower 4 bits signal VY, to be the output signal of the A/D conversion circuit 505.

The selectors 821 to 826 can make the received current A2 from double to 1/32 times. The upper 3 bits signal VE corresponds to a scaling factor thereof. The comparators 841 to 848 compare the signals which are further made the above-stated signal from one time to 9/16 times, with the reference current IB, and performs the comparison with 1/16 accuracy. The comparison result corresponds to the lower 4 bits signal VY. The controller 805 performs the control in accordance with a signal VDOWN corresponding to the output signal of the comparator 841 and a signal VUP corresponding to the output signal of the comparator 848. The A/D conversion circuit 505 is able to convert the analog signal A2 into the digital signal A6 with the above-stated configuration.

As stated above, the A/D conversion circuit 505 makes the received signal value 2M times or 1/2M times (M is a natural number) by the arithmetic circuits 811 to 816 and the selectors 821 to 826, performs the comparison with a reference signal value IB based on the result, to thereby converts the received signal value from the analog format to the digital format.

Besides, the A/D conversion circuit 505 makes the signal value which is made 2M times or 1/2M times, into N/P times (N and P are natural numbers) by the arithmetic circuits 831 to 838, compares the result with the reference signal value IB, to thereby convert the received signal value from the analog format to the digital format.

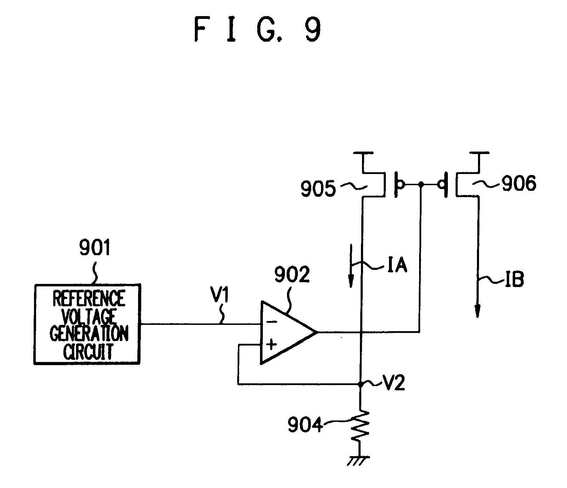

Fig. 9 is a circuit diagram showing a configuration example of a circuit to generate the reference current IB in Fig. 8. A reference voltage generation circuit (BGR) 901 generates a reference voltage V1. A comparator 902 compares the voltages V1 and V2, and outputs the comparison result to a gate of a p-channel MOS field-effect transistor 905. The voltage V2 is a drain voltage of the transistor 905. A drain of the transistor 905 is connected to the ground via a resistance 904. A source of the transistor 905 is connected to a power supply voltage. A gate of a p-channel MOS field-effect transistor 906 is connected to the gate of the transistor 905, and a source is connected to the power supply voltage. A drain current of the transistor 906 becomes the reference current IB.

By functions of the comparator 902 and the transistor 905, the voltage V2 becomes the same as the voltage V1. The voltages V1 and V2 are, for example, 1.2 V. The resistance 904 is, for example, 1.2 MΩ. A current IA flowing in the resistance 904 is 1.2 V/ 1.2 MΩ = 1 μA. The transistors 905 and 906 are composing a current mirror circuit, and the currents IA and IB become the same. Herewith, the reference current IB becomes to be a constant current of 1 μA.

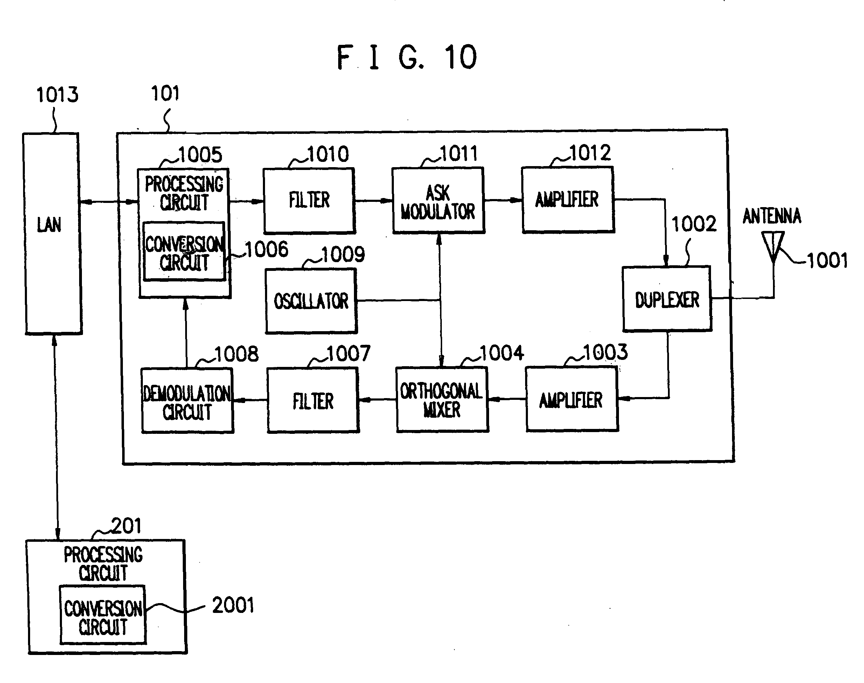

Fig. 10 is a view showing a configuration example of the reader/writer 101 in Fig. 1. When the above-stated tag 102 transmits the size of the signal to the reader/writer 101, the reader/writer 101 requires a conversion circuit 1006. On the contrary, when the above-stated tag 102 transmits the distance information to the reader/writer 101, the reader/writer 101 does not require the conversion circuit 1006.

The reader/writer 101 supplies a power source to the tag 102 by a radio signal, performs a radio communication with the tag 102, and therefore, it has an antenna portion 1001, a duplexer 1002, an amplifier 1003, an orthogonal mixer 1004, a filter 1007, a demodulator 1008, an oscillator 1009, a filter 1010, an ASK modulator 1011, an amplifier 1012, and a processing circuit 1005. Hereinafter, operations thereof are described.

The reader/writer 101 performs a receiving of an information signal or a transmission of timing information with a LAN 1013 via the processing circuit 1005. The processing circuit 1005 outputs a command generated by itself and the information signal received from the LAN 1013 to the filter 1010. The filter 1010 outputs a band of data from the processing circuit 1005 to the ASK modulator 1011 as a restricted signal. The ASK modulator 1011 makes an ASK (amplitude modulation) of a carrier signal from the oscillator 1009 with the signal from the filter 1010. Besides, the ASK signal is amplified at the amplifier 1012, and transmitted to an RF tag via the duplexer 1002 and the antenna 1001.

Next, a receiving operation of a signal (indicating a signal modulated with changing a reflectivity of the antenna) from the RF tag in the reader is described as follows by using Fig. 10.

The antenna 1001 outputs the received signal (hereinafter referred to as a modulation signal) to the orthogonal mixer 1004 via the duplexer 1002 with amplifying by the amplifier 1003. The orthogonal mixer 1004 demodulates the amplified modulation signal into an IF signal by an output of the oscillator 1009. The filter 1007 is an LPF, and it is used to suppress an interference between adjacent channels of the IF signal by removing a high-frequency component.

The demodulator 1008 demodulates the signal from the filter 1007 into a data to output to the processing circuit 1005. The processing circuit 1005 processes the demodulated data, or the processing circuit 1005 outputs a data and so on read from the RF tag, to the LAN 1013.

At first, the case when the reader/writer 101 receives the distance information from the tag 102 is described. In that case, the processing circuit 1005 can immediately obtain the distance information based on the demodulated signal.

Next, the case when the reader/writer 101 receives the size of the signal from the tag 102 is described. The conversion circuit 1006 within the processing circuit 1005 is the same as the conversion circuit 702 in Fig. 7, and converts the size of the demodulated signal into the distance information. Herewith, the processing circuit 1005 can obtain the distance information.

Further, there is a case when the size of the signal is outputted to the LAN as it is, and the size of the demodulated signal is converted into the distance information by a conversion circuit 2001 which is the same as the conversion circuit in Fig. 7, inside of another system 201 connected to the LAN.

As stated above, the reader/writer 101 transmits the signal to the tag 102 via the antenna. Next, the tag 102 converts the size of the signal received from the reader/writer 101 via the antenna, from the analog format to the digital format, and transmits the signal in digital format or the signal based on that to the reader/writer 101 via the antenna. Next, the reader/writer 101 receives the transmitted signal from the tag 102 via the antenna, to thereby obtain the distance information. When the reader/writer 101 receives the above-stated signal in digital format, it converts the signal into the distance information based on the received signal.

It is possible to measure respective distances between plural reader/writers 101 and the tag 102, if the plural reader/writers 101 fixed in two dimension or three dimension are provided relative to at least one movable tag 102. Herewith, the reader/writer 101 can ask the position of the tag 102 in two dimensional coordinates or three dimensional coordinates by a calculation.

Besides, it is possible to measure respective distances between plural tags 102 and the reader/writer 101, if the plural tags 102 fixed in two dimension or three dimension are provided relative to at least one movable reader/writer 101. Herewith, the reader/writer 101 can ask the position of the reader/writer 101 in two dimensional coordinates or three dimensional coordinates by a calculation.

In the present embodiment the plural antennas are not used, or the interrogation waves having different reaching distances in stages are not emitted sequentially compared to the above-stated Patent Document 1, and therefore, the cost can be reduced. Besides, an access is not performed with different interrogation waves in plural time, and therefore, it is possible to measure the distance in high-speed. Further, in the present embodiment, a dispersion of the signal is small and an electric power of the signal is large compared to the system in which the reader/writer detects the time, the intensity, or the waveform shape of the radio signal returned from the tag to thereby determine the distance of the tag as in the above-stated Patent Document 2, and therefore, a noise resistance is high, and the distance can be measured accurately.

Besides, the present embodiment does not depend on a dispersion of a reflection coefficient of the tag, compared to the case when the reader/writer measures the returned signal reflected by the tag, as in the above-stated Patent Document 2. Further, the electric power received by the tag in the present embodiment is far larger than the signal which is arrived at the reader/writer after it is reflected and further damped, in the Patent Document 2, and therefore, the noise resistance is high.

It is possible to reduce the cost because the plural antennas are not used, and the interrogation waves having different reaching distances are not emitted in stages. Besides, an access is not performed with different interrogation waves in plural times, and therefore, it becomes possible to measure the distance in high-speed. Besides, the dispersion of the signal is small and the electric power of the signal is large compared to the system in which the RFID reader/writer device detects the time, intensity, or the waveform shape of the radio signal returned from the RFID tag device to determine the distance of the RFID tag, and therefore, the noise resistance is high, and the distance can be measured accurately.

Incidentally, the above-stated present embodiment is to be considered in all respects as illustrative and no restrictive, and all changes which come within the meaning and range of equivalency of the claims are therefore intended to be embraced therein. The invention may be embodied in other specific forms without departing from the spirit or essential characteristics thereof.

**Claims**

1. An RFID tag device, comprising:

    an analog/digital conversion circuit for converting a size of a signal received via an antenna from an analog format to a digital format; and
    a transmission circuit transmitting the signal in digital format or the signal based on the signal in digital format via the antenna.

2. The RFID tag device according to claim 1, further comprising:

    a rectifying circuit for rectifying the received signal, and
    wherein said analog/digital conversion circuit converts the size of the rectified signal from the analog format to the digital format.

3. The RFID tag device according to claim 2, further comprising:

    a capacitor charging a power supply voltage based on the rectified signal.

4. The RFID tag device according to claim 3, further comprising:

    a shunt regulator controlling a short-circuit current amount to keep the power supply voltage charged into said capacitor in constant.

5. The RFID tag device according to any one of claims 1 to 4,
    wherein said analog/digital conversion circuit converts a current value of the received signal from the analog format to the digital format.

6. The RFID tag device according to claim 5, further comprising:

    a monitor circuit monitoring a current of the received signal, and
    wherein said analog/digital conversion circuit converts the monitored current value from the analog format to the digital format.

7. The RFID tag device according to any preceding claim, further comprising:

    a peak detecting circuit detecting a peak portion of the received signal, and
    wherein said analog/digital conversion circuit converts the detected signal at the peak portion from the analog format to the digital format.

8. The RFID tag device according to any one of claims 1 to 7, further comprising:

a bottom detecting circuit detecting a bottom portion of the received signal, and
wherein said analog/digital conversion circuit converts the detected signal at the bottom portion from the analog format to the digital format.

9. The RFID tag device according to any preceding claim, wherein said analog/digital conversion circuit starts the conversion from the analog format to the digital format when a specified command is received.

10. The RFID tag device according to any preceding claim, wherein said transmission circuit transmits the signal when a specified command is received.

11. The RFID tag device according to any preceding claim, wherein said analog/digital conversion circuit makes the received signal value 2M times or 1/2M times (M is a natural number), compares with a reference signal value based on the signal value, to thereby convert the received signal value from the analog format to the digital format.

12. The RFID tag device according to claim 11, wherein said analog/digital conversion circuit makes the signal value which is made 2M times or 1/2M times, into N/P times (N and P are natural numbers), compares the result with the reference signal value, to thereby convert the received signal value from the analog format to the digital format.

13. The RFID tag device according to any preceding claim, wherein said transmission circuit converts the signal in digital format into distance information, and transmits the distance information via the antenna.

14. The RFID tag device according to claim 4, wherein said analog/digital conversion circuit converts the current value of the received signal from the analog format to the digital format.

15. The RFID tag device according to claim 14, further comprising:

a monitor circuit monitoring a current of the rectified signal, and
wherein said analog/digital conversion circuit converts the monitored current value from the analog format to the digital format.

16. The RFID tag device according to claim 15, further comprising:

a peak detecting circuit detecting a peak portion of the monitored current, and
wherein said analog/digital conversion circuit converts the detected current value at the peak portion from the analog format to the digital format.

17. The RFID tag device according to claim 15, further comprising:

a bottom detecting circuit detecting a bottom portion of the monitored current, and
wherein said analog/digital conversion circuit converts the detected current value at the bottom portion from the analog format to the digital format.

18. An RFID reader/writer device, comprising:

a transmission circuit for transmitting a signal via an antenna; and
a conversion circuit for receiving a signal representing a size of the transmitted signal via the antenna, and converting into distance information based on the received signal.

19. A distance measuring system, comprising:

an RFID reader/writer device; and
an RFID tag device, and

wherein said RFID reader/writer device including:

a first transmission circuit transmitting a signal to said RFID tag device via an antenna; and
a processing circuit receiving the signal from said RFID tag device via the antenna after the transmission to obtain distance information, and

wherein said RFID tag device including:

an analog/digital conversion circuit converting a size of the signal received from said RFID reader/writer device via the antenna, from an analog format to a digital format; and
a second transmission circuit transmitting the signal in digital format or the signal based on the signal in digital format to said RFID reader/writer device via the antenna.

**20.** The distance measuring system according to claim 19,
wherein the processing circuit converts into the distance information based on the received signal.

# F I G. 1

# F I G. 2

# F I G. 3

EP 1 760 640 A1

# F I G. 4

# F I G. 5

# F I G. 6

EP 1 760 640 A1

# F I G. 7

305

701

A5

**LOGIC CIRCUIT**

ST

702

703

A6

**CONVERSION CIRCUIT**

**PARALLEL/SERIAL CONVERSION CIRCUIT**

704

**MEMORY**

705

A7

**TRANSMISSION CIRCUIT**

F I G. 8

# F I G. 9

# F I G. 10

EP 1 760 640 A1

**European Patent Office**

**EUROPEAN SEARCH REPORT**

Application Number

EP 06 25 1132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 42 27 551 A1 (EUROSIL ELECTRONIC GMBH [DE]) 24 February 1994 (1994-02-24) * column 3, line 28 - column 5, line 8; claims 12,13 * | 1 | INV. G06K19/07 G06K7/00 G01S11/06 G01S5/00 H04L27/00 |
| X | FR 2 746 200 A1 (GEMPLUS CARD INT [FR]) 19 September 1997 (1997-09-19) * page 4, line 20 - line 31 * * page 7, line 20 - page 8, line 5; figures 3,4 * | 1 | |
| A | US 6 473 028 B1 (LUC WUIDART [FR]) 29 October 2002 (2002-10-29) * column 5, line 36 - column 6, line 64; figure 4 * | 1-20 | |
| A | US 5 619 207 A (D HONT LOEK [NL]) 8 April 1997 (1997-04-08) * column 1, line 26 - line 37 * * column 4, line 26 - line 32 * * claim 4 * | 1-20 | |
| A | US 2002/109581 A1 (BLATZ WERNER [DE]) 15 August 2002 (2002-08-15) * paragraphs [0009], [0026] * | 1-20 | TECHNICAL FIELDS SEARCHED (IPC) G06K G01S H04L |
| A | EP 1 359 538 A (MICROSOFT CORP [US]) 5 November 2003 (2003-11-05) * paragraphs [0007], [0026], [0033], [0034] * | 1-20 | |

The present search report has been drawn up for all claims

| Place of search | Date of completion of the search | Examiner |
|---|---|---|
| Munich | 27 October 2006 | Heusler, Nikolaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 760 640 A1

## ANNEX TO THE EUROPEAN SEARCH REPORT
## ON EUROPEAN PATENT APPLICATION NO.

EP 06 25 1132

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | | Publication date | Patent family member(s) | | Publication date |
|---|---|---|---|---|---|
| DE 4227551 | A1 | 24-02-1994 | EP | 0583690 A2 | 23-02-1994 |
| | | | KR | 275167 B1 | 15-12-2000 |
| | | | US | 5418358 A | 23-05-1995 |
| FR 2746200 | A1 | 19-09-1997 | AT | 185435 T | 15-10-1999 |
| | | | CA | 2224905 A1 | 18-09-1997 |
| | | | DE | 69700590 D1 | 11-11-1999 |
| | | | DE | 69700590 T2 | 04-05-2000 |
| | | | EP | 0876654 A1 | 11-11-1998 |
| | | | ES | 2140225 T3 | 16-02-2000 |
| | | | WO | 9734250 A1 | 18-09-1997 |
| US 6473028 | B1 | 29-10-2002 | EP | 1045325 A1 | 18-10-2000 |
| | | | FR | 2792134 A1 | 13-10-2000 |
| | | | JP | 3293610 B2 | 17-06-2002 |
| | | | JP | 2000346934 A | 15-12-2000 |
| US 5619207 | A | 08-04-1997 | EP | 0650074 A1 | 26-04-1995 |
| | | | US | 5594448 A | 14-01-1997 |
| US 2002109581 | A1 | 15-08-2002 | DE | 10106736 A1 | 20-02-2003 |
| | | | FR | 2828037 A1 | 31-01-2003 |
| | | | GB | 2375644 A | 20-11-2002 |
| | | | IT | MI20020128 A1 | 25-07-2003 |
| | | | JP | 3722216 B2 | 30-11-2005 |
| | | | JP | 2002271304 A | 20-09-2002 |
| EP 1359538 | A | 05-11-2003 | US | 2003206115 A1 | 06-11-2003 |
| | | | US | 2005270170 A1 | 08-12-2005 |

EPO FORM P0459

For more details about this annex : see Official Journal of the European Patent Office, No. 12/82

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005250158 A
- JP 2001116583 A
- WO 2002525640 A
- JP 2001092885 A